# EUROPÄISCHE PATENTSCHRIFT

(11) **EP 4 264 241 B1**
(45) Veröffentlichungstag und Bekanntmachung des Hinweises auf die Patenterteilung: **14.08.2024**
(21) Anmeldenummer: 21820227.3
(22) Anmeldetag: 26.11.2021
(51) Int. Cl.: H01Q 13/06, G01N 22/00, H01P 5/103

(54) **ANTENNE ZUR DIELEKTRIZITÄTSWERT-MESSUNG**
ANTENNA FOR MEASURING DIELECTRIC VALUES
ANTENNE DE MESURE DE VALEURS DIÉLECTRIQUES

(30) Priorität: 18.12.2020 DE 102020134320
(43) Veröffentlichungstag der Anmeldung: 25.10.2023
(73) Patentinhaber: Endress + Hauser Flowtec AG, 4153 Reinach (CH)
(72) Erfinder: PFLÜGER, Stefan, 80995 München (DE); IHRINGER, Thilo, 79618 Rheinfelden (DE)
(74) Vertreter: Büker, Florian
(86) Internationale Anmeldenummer: PCT/EP2021/083103
(87) Internationale Veröffentlichungsnummer: WO 2022/128404

(56) Entgegenhaltungen:
- DE-A1- 102012 105 281
- DE-A1- 2 616 217
- JP-A- S57 204 605
- US-A- 3 478 282
- US-A- 5 473 256

## Beschreibung

Die Erfindung betrifft eine Antenne für Hochfrequenz-basierte Dielektrizitätswert-Messung.

In der Automatisierungstechnik, insbesondere zur Prozessautomatisierung werden vielfach Feldgeräte eingesetzt, die zur Erfassung diverser Messgrößen dienen. Bei der zu bestimmenden Messgröße kann es sich beispielsweise um einen Füllstand, einen Durchfluss, einen Druck, die Temperatur, den pH-Wert, das Redoxpotential, eine Leitfähigkeit oder den Dielektrizitätswert eines Mediums in einer Prozessanlage handeln. Zur Erfassung der entsprechenden Messwerte umfassen die Feldgeräte jeweils geeignete Sensoren bzw. basieren auf geeigneten Mess-Verfahren. Eine Vielzahl verschiedener Feldgeräte-Typen wird von der Firmen-Gruppe Endress + Hauser hergestellt und vertrieben.

Aus dem komplexwertigen Dielektrizitätswert (auch bekannt als *"Dielektrizitätskonstante"* oder *"Relative Permittivität"*) können diverse Messgrößen des vorliegenden Mediums abgeleitet werden, wie beispielsweise der Feuchtegehalt, die Stoffzusammensetzung oder etwaige Verunreinigungen. Daher ist die Bestimmung des Dielektrizitätswertes sowohl bei Feststoff-artigen Medien wie Zement oder Getreide, als auch bei flüssigen und gasförmigen Medien, wie beispielsweise bei Treibstoffen, Abwässern, Gasen oder Chemikalien von großem Interesse. Hierbei kann der Dielektrizitätswert prinzipiell sowohl bei lagernden als auch bei strömenden Medien bestimmt werden. Dementsprechend definiert sich der Begriff *"Behälter"* im Rahmen der Erfindung beispielsweise als Tank, Silo, Becken oder als Rohrleitungsabschnitt.

Neben dem induktiven- und kapazitiven Messprinzip zur Bestimmung des Dielektrizitätswertes werden vor allem Hochfrequenz-basierte Messprinzipien angewendet. Diesbezüglich bezieht sich der Begriff *"Hochfrequenz"* im Kontext dieser Patentanmeldung auf entsprechende Signale mit Frequenzen zwischen 0.03 GHz und 300 GHz. Hierbei ist es neben dem TDR-Prinzip (*"Time Domain Reflectometry"*) möglich, den Dielektrizitätswert mittels transmittiver bzw. reflektiver Hochfrequenz-Messung zu bestimmen. Im Fall des transmittiven Messprinzips wird innerhalb des Behälters, welcher das zu untersuchende Medium enthält, ein Hochfrequenz-Signal mit einer definierten Frequenz bzw. Frequenz-Änderung in eine Messstrecke, die durch das Medium führt, eingekoppelt. Dabei wird nach Durchlauf durch die Messstrecke eine Amplitude/Amplitudenänderung, und/oder eine Phase/Phasenverschiebung gemessen, um hieraus beispielsweise auf Basis entsprechender Kalbrationsmessungen wiederum den ggf. komplexwertigen Dielektrizitätswert zu bestimmen. Näher beschrieben ist ein transmittiv arbeitendes Dielektrizitätswert-Messgerät beispielsweise in der deutschen Veröffentlichungsschrift DE 10 2017 130 728 A1.

An die Antennen von Hochfrequenz-basierten Dielektrizitätswert-Messgeräten werden je nach Prozessanlage konstruktiv diverse Anforderungen gestellt, da die Antennen gegebenenfalls die einzigen Komponenten mit direktem Kontakt zum Medium sind: So müssen die Antennen einerseits gegen aggressive Medien, hohe Drücken und hohe Temperaturen beständig sein. Des Weiteren dürfen die Antennen möglichst nicht in den Behälter hineinragen. Andererseits müssen die Antennen ein effizientes Übertragungsverhalten der Hochfrequenz-Signale aufweisen.

In der Veröffentlichungsschrift US 5473256 A ist eine Antenne für ein Hochfrequenz-basiertes Messgerät beschrieben, die auf einem dielektrischen Wellenleiter zur Einkopplung in das Medium basiert. Dabei wird der Wellenleiter signaltechnisch durch einen Koaxialleiter gespeist, welcher hierzu in den Wellenleiter eingesteckt ist.

In dem britischen Patent GB 2 293 014 wird eine Hohlleiter-basierte Antenne für Hochfrequenz-basierte Dielektrizitätswert-Bestimmung beschrieben. Dabei wird der Hohlleiter aus einem Edelstahlkörper gebildet, in den eine GlasKeramik-Füllung eingeschmolzen ist. Durch die Glasfüllung erhält die Antenne eine hohe Beständigkeit gegenüber den Bedingungen im Behälter. Allerdings ist die Glasfüllung mit einer aufwändigen Fertigung verbunden. Des Weiteren weist die Antenne zwangsweise ein vergleichsweise großes Volumen auf, da Glaskeramik eine vergleichsweise geringe Permittivität aufweist.

Der Erfindung liegt daher die Aufgabe zu Grunde, zur hochfrequenztechnischen Dielektrizitätswert-Messung eine effiziente Antenne mit großer Druck- und Temperaturbeständigkeit bereitzustellen, die kompakt und einfach fertigbar ist.

Die Erfindung löst diese Aufgabe durch eine Antenne zum Aussenden und/oder Empfangen von Hochfrequenz-Signalen, die zumindest folgende Komponenten umfasst:
- Einen Hochfrequenz-Wellenleiter, mittels dem das Hochfrequenz-Signal entlang einer insbesondere geradlinigen Wellenleiter-Achse transmittierbar ist, mit
   ∘ einer ersten Endfläche, die in etwa orthogonal zur Wellenleiter-Achse ausgerichtet ist, um das Hochfrequenz-Signal hierüber auszusenden bzw. zu empfangen, und mit
   ∘ einer in etwa rechtwinklig zur Wellenleiter-Achse verlaufenden Durchführung, für
- einen Koaxial-Leiter, um das auszusendende Hochfrequenz-Signal in den Hochfrequenz-Wellenleiter einzukoppeln, bzw. um das empfangene Hochfrequenz-Signal abzugreifen, mit
   ∘ einem elektrischen Außenleiter, der elektrisch mit dem Hochfrequenz-Wellenleiter verbunden ist,
   ∘ einem derart ausgelegten Leiter-Abschluss, so dass das einzukoppelnde bzw. abzugreifende Hochfrequenz-Signal dort reflektiert wird, und
   ∘ einem dem Leiter-Abschluss gegenüberliegenden Anschluss-Mittel zur hochfrequenztechnischen Kontaktierung der Antenne.

Dabei ist der Koaxial-Leiter erfindungsgemäß derart weit über die Durchführung hinaus durchgeführt, so dass der Koaxial-Leiter zwischen der Durchführung und dem Leiter-Abschluss eine definierte Kapazität ausbildet. Hierdurch wird der Koaxial-Leiter hochfrequenztechnisch optimal an den Hochfrequenz-Wellenleiter angepasst, ohne hierfür zusätzliche elektrische Komponenten integrieren zu müssen. Hieraus resultiert eine Hochfrequenztechnisch effiziente Antenne, die aufgrund ihrer wenigen Komponenten einfach fertigbar ist.

Sofern der Hochfrequenz-Wellenleiter und der Koaxial-Leiter zumindest zwischen der Durchführung und dem Leiter-Abschluss konstruktiv durch einen Trägerkörper eingefasst sind, ist es möglich, den Hochfrequenz-Wellenleiter als Hohlleiter zu konzipieren, indem der Trägerkörper als Negativ-Form des Hochfrequenz-Wellenleiters ausgebildet wird. In diesem Fall muss der Trägerkörper zumindest auf der Oberfläche dieser Negativ-Form elektrisch leitfähig ausgestaltet sein, sofern der Trägerkörper nicht komplett aus einem elektrisch leitfähigen Material, wie einem Stahl, gefertigt ist. Alternativ zu einer Auslegung als Hohlleiter ist es auch denkbar, den Hochfrequenz-Wellenleiter als dielektrischen Wellenleiter auszulegen.

Auch wenn der Hochfrequenz-Wellenleiter als Hohlleiter konzipiert ist, bietet es Vorteile, wenn der Hochfrequenz-Wellenleiter mit einem dielektrischen Material gefüllt ist, welches bei einer entsprechenden Frequenz des Hochfrequenz-Signals eine Permittivität von zumindest 2 aufweist, wie insbesondere Titan-Oxid, Aluminium-Oxid oder Zirkon-Oxid. Hierdurch können die Abmessungen des Hochfrequenz-Wellenleiters im Vergleich zu einem Luft-gefüllten Hohlleiter deutlich reduziert werden. Außerdem sind diese Materialien chemisch und physikalisch äußerst robust, wodurch die Antenne eine große Druck- und Temperaturbeständigkeit erlangen kann.

Aus Hochfrequenztechnischer Sicht ist es außerdem vorteilhaft, wenn die zweite Endfläche des Hochfrequenz-Wellenleiters, die in Bezug zur Wellenleiter-Achse der ersten Endfläche gegenüberliegt, das Hochfrequenz-Signal mit einem Phasensprung von 180° reflektiert. Sofern der Hochfrequenz-Wellenleiter auf Basis eines dielektrischen Materials gefertigt ist, kann ein entsprechender Phasensprung an der zweiten Endfläche beispielsweise realisiert werden, wenn die zweite Endfläche des Hochfrequenz-Wellenleiters mit einer Metallisierung versehen ist. Auch für den Fall, dass der Hochfrequenz-Wellenleiter als Hohlleiter ausgebildet ist, kann ein entsprechender Phasensprung durch eine leitfähige Auslegung der zweiten Endfläche erreicht werden.

Sofern die Aus- und Einkopplung des Hochfrequenz-Signals zwischen Antenne und Medium optimal ist, kann hierdurch die Sensitivität der Dielektrizitätswert-Messung maximiert werden. Daher ist es vorteilhaft, wenn die Antenne eine Cutoff-Frequenz aufweist, die minimal 10 % niedriger als die - niedrigste - Frequenz des Hochfrequenz-Signals ist. Der diesbezüglich primär zu optimierende Parameter ist der Querschnitt des Hochfrequenz-Wellenleiters. Die Entfernung zwischen der Durchführung und der zweiten Endfläche im Hochfrequenz-Wellenleiter ist vorzugsweise so zu wählen, dass sie einem Viertel der Wellenlänge des Hochfrequenz-Signals entspricht. In Kombination mit dem Phasensprung von 180° an der zweiten Endfläche des Hochfrequenz-Wellenleiters ergibt sich hierdurch eine positive Interferenz des Hochfrequenz-Signals im Hochfrequenz-Wellenleiter, wodurch die Einkopplung bzw. Auskopplung des Hochfrequenz-Signals in den bzw. aus dem Hochfrequenz-Wellenleiter maximiert wird.

Die resultierende Kapazität des Koaxial-Leiters zwischen der Durchführung im Hochfrequenz-Wellenleiter und dem Leiter-Abschluss ist optimalerweise so zu konzipieren, dass sie die parasitäre Kapazität des Hochfrequenz-Wellenleiters kompensiert. Diesbezüglich ist es außerdem vorteilhaft, wenn der Leiter-Abschluss des Koaxial-Leiters so ausgelegt ist, dass das einzukoppelnde bzw. abzugreifende Hochfrequenz-Signal dort ohne Phasensprung reflektiert wird (bspw. mittels eines Hohlraums zwischen dem Koaxial-Leiter und dem Trägerkörper).

Eine einfache Fertigung der erfindungsgemäßen Antenne ist vor allem dann möglich, wenn der Hochfrequenz-Wellenleiter mittels eines Schraubeinsatzes, welcher über den Leiter-Abschluss in Richtung des Koaxial-Leiters in den Trägerkörper einschraubbar ist, im Trägerkörper fixiert ist. Ein entsprechend einfaches Verfahren zur Fertigung der Antenne umfasst dabei folgende Verfahrensschritte:
- Bereitstellen des Hochfrequenz-Wellenleiters, des Koaxial-Leiters und des Trägerkörpers,
- Einsetzen des Hochfrequenz-Wellenleiters in den Trägerkörper über eine korrespondierende Öffnung des Trägerkörpers für die erste Endfläche des Hochfrequenz-Wellenleiters,
- Einsetzen des Koaxial-Leiters in die Durchführung des Hochfrequenz-Wellenleiters, und
- Fixierung des Hochfrequenz-Wellenleiters und/oder des Koaxial-Leiters mittels Einschrauben des Schraubeinsatzes in den Trägerkörper.

Auf Basis der erfindungsgemäßen Antenne kann ein Hochfrequenz-basiertes Messgerät zur Bestimmung eines Dielektrizitätswertes eines Mediums realisiert werden. Hierzu hat das Messgerät folgende Komponenten zu umfassen:
- Zumindest eine Antenne gemäß einer der zuvor erwähnten Ausführungsvarianten, um das Hochfrequenz-Signal gen Medium auszusenden, und/oder um das Hochfrequenz-Signal nach Interaktion mit dem Medium zu empfangen,
- eine Signalerzeugungs-Einheit, die zur Erzeugung des auszusendenden Hochfrequenz-Signals - ggf. über eine Sende-/Empfangs-Weiche - mit dem Anschluss-Mittel der Sende-Antenne verbunden ist, und
- eine Auswertungs-Einheit, die - wiederum ggf. über die Sende-/Empfangs-Weiche - mit dem Anschluss-Mittel der Empfangs-Antenne verbunden ist, um den Dielektrizitätswert anhand des empfangenen Hochfrequenz-Signals zu bestimmen.

Im Rahmen der Erfindung bezieht sich der Begriff *"Interaktion"* entweder auf Transmission durch das Mediums entlang einer definierten Messstrecke (also zwischen der Sende-Antenne und der Empfangs-Antenne), oder auf Reflektion am Medium.

Die Auswertungs-Einheit kann den Dielektrizitätswert des Mediums zumindest im Falle des transmittiven Messprinzips anhand einer Amplitude, einer Phase oder einer Signallaufzeit des empfangenen Hochfrequenz-Signals komplexwertig ermitteln. In diesem Zusammenhang wird unter dem Begriff *"Einheit"* im Rahmen der Erfindung prinzipiell jede elektronische Schaltung verstanden, die für den angedachten Einsatzzweck geeignet ausgelegt ist. Es kann sich also je nach Anforderung um eine Analogschaltung zur Erzeugung bzw. Verarbeitung entsprechender analoger Signale handeln. Es kann sich jedoch auch um eine Digitalschaltung, wie einem FPGA oder ein Speichermedium in Zusammenwirken mit einem Programm handeln. Dabei ist das Programm ausgelegt, die entsprechenden Verfahrensschritte durchzuführen bzw. die notwendigen Rechenoperationen der jeweiligen Einheit anzuwenden. In diesem Kontext können verschiedene elektronische Einheiten des Messgerätes im Sinne der Erfindung potenziell auch auf einen gemeinsamen physikalischen Speicher zurückgreifen bzw. mittels derselben physikalischen Digitalschaltung betrieben werden.

Anhand der nachfolgenden Figuren wird die Erfindung näher erläutert. Es zeigt:
Fig. 1: Ein hochfrequenzbasiertes Dielektrizitätswert-Messgerät an einem Rohrleitungsabschnitt, und
Fig. 2: eine Querschnittsansicht der erfindungsgemäßen Antenne zur Hochfrequenz-basierten Dielektrizitätswert-Messung.

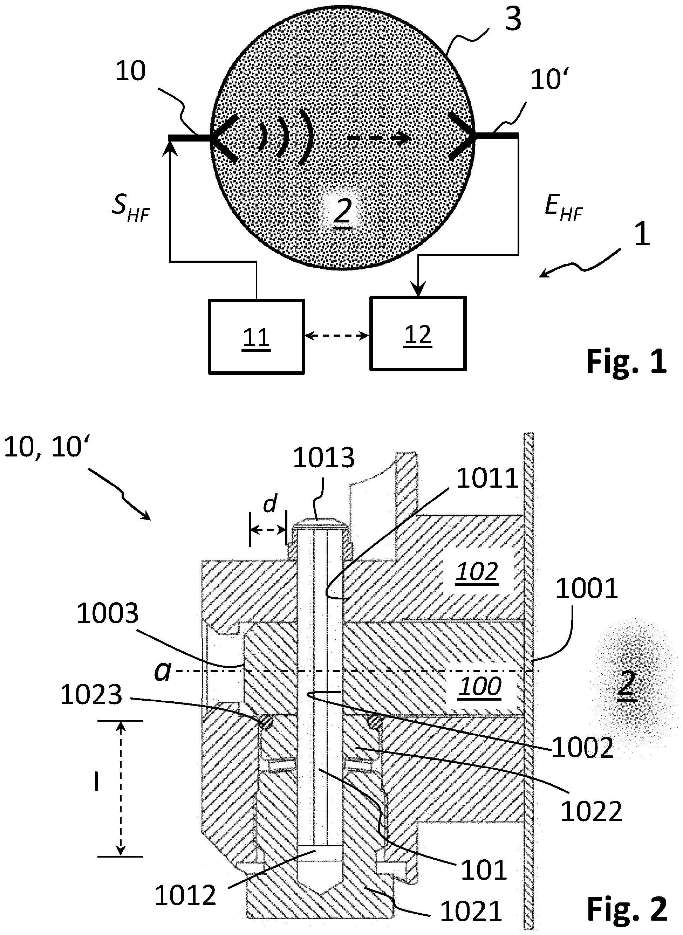

Zum allgemeinen Verständnis von transmittiver Dielektrizitätswert-Messung ist in Fig. 2 ist eine Querschnittsansicht eines Rohrleitungsabschnittes 3 illustriert. Der Rohrleitungsabschnitt 3 wird von einem gasförmigen Medium 2 wie Propan, Stickstoff etc. oder von einem flüssigen Medium 2 wie Treibstoff, Getränken oder Abwässern mit feststoffartigen Sedimenten durchströmt. Hierbei ist der Dielektrizitätswert DK des Mediums 2 zu bestimmen. Dazu sind an der Innenwand des Rohrleitungsabschnittes 3 gegenüberliegend zueinander eine Sende-Antenne 10 und eine Empfangs-Antenne 10' angeordnet und zueinander ausgerichtet. Die Sende-Antenne 10 dient zum Aussenden von Hochfrequenz-Signalen S_{HF} gen Medium 2, während die Empfangs-Antenne 10' die Hochfrequenz-Signale E_{HF} nach Durchlaufen der resultierenden Messstrecke empfängt.

Das Hochfrequenz-Signal S_{HF} wird von einer entsprechend ausgelegten Signalerzeugungs-Einheit 12 generiert, welche hierzu mit der Sende-Antenne 10 verbunden ist. Anhand des Empfangs-Signals E_{HF} bestimmt das Dielektrizitätswert-Messgerät 1 wiederum den Dielektrizitätswert DK des Mediums 2. Hierzu ist eine Auswertungs-Einheit 12 des Dielektrizitätswert-Messgeräts 1 an die Empfangs-Antenne 10` angeschlossen, um die Phase, die Signallaufzeit und/oder die Amplitude des Empfangs-Signals E_{HF} zu erfassen. Hieraus kann die Auswertungs-Einheit 12 beispielsweise auf Basis von entsprechenden Kalibrationsdaten wiederum den Dielektrizitätswert DK des Mediums 2 bestimmen. Damit die Phase bzw. Amplitude auch relativ zum auszusendenden Hochfrequenz-Signal S_{HF} ermittelt werden kann, ist die Auswertungs-Einheit 12 bei Bedarf entsprechend mit der Signalerzeugungs-Einheit 11 verschaltet, wie in Fig. 1 dargestellt ist. Dabei kann die Signalerzeugungs-Einheit 11 bei dem in Fig. 1 dargestellten Dielektrizitätswert-Messgerät 1 beispielsweise auf einer PLL (*"Phase Locked Loop"*) basieren. In diesem Zusammenhang können die Signalerzeugungs-Einheit 11 und die Auswertungs-Einheit 12 beispielsweise gemeinsam als Netzwerk-Analysator konzipiert werden.

Alternativ zu der in Fig. 1 gezeigten Ausführungsvariante des Dielektrizitätswert-Messgerätes 1 kann eine der Antennen 10, 10' des Dielektrizitätswert-Messgerätes 1 auch als kombinierte Sende-/Empfangs-Antenne ausgelegt werden, während am Ort der anderen Antenne 10, 10` ein Reflektor für das Hochfrequenz-Signal S_{HF}, E_{HF} angebracht wird. In diesem Fall sind die Signalerzeugungs-Einheit 11 und Auswertungs-Einheit 12 jeweils getrennt über eine Sende-/Empfangs-Weiche mit der Sende-/Empfangs-Antenne zu verbinden. In einer weiteren Abwandlung hiervon kann auch auf den Reflektor verzichtet werden, so dass über die kombinierte Sende-/Empfangs-Antenne nicht der transmittierte Anteil E_{HF}, sondern der an der Sende-/Empfangs-Antenne reflektierte Anteil des erzeugten Hochfrequenz-Signals S_{HF} durch die Auswertungs-Einheit 12 bestimmt wird. Analog zum transmittiven Verfahren kann im Falle dieses reflektiven Verfahrens der Dielektrizitätswert des Mediums 2 über den reflektierten Anteil des erzeugten Hochfrequenz-Signals S_{HF} bestimmt werden.

Fig. 2 zeigt einen erfindungsgemäßen Antennen-Aufbau, der kompakt auslegbar und einfach fertigbar ist, wobei dieser Antennen-Aufbau eine große Druck- und Temperaturbeständigkeit erlaubt. Kern des dortigen Antennen-Aufbaus, der gleichermaßen als Sende-Antenne 10, wie auch als Empfangs-Antenne 10` eingesetzt werden kann, ist ein Hochfrequenz-Wellenleiter 100, in dem das auszusendende Hochfrequenz-Signal S_{HF} und das zu empfangene Hochfrequenz-Signal E_{HF} entlang einer geradlinigen Wellenleiter-Achse a transmittierbar ist. Gen Medium 2 wird der Hochfrequenz-Wellenleiter 100 durch eine erste Endfläche 1001 abgeschlossen. Damit das auszusendende Hochfrequenz-Signal S_{HF} über die erste Endfläche 1001 verlustarm in das Medium 2 einkoppelbar ist, bzw. damit das zu empfangene Hochfrequenz-Signal E_{HF} verlustarm in den Hochfrequenz-Wellenleiter 100 einkoppelbar ist, weist die erste Endfläche 1001 eine zur Wellenleiter-Achse a in etwa orthogonale Ausrichtung auf. Dabei sind die Querschnittsform (bspw. rund oder rechteckig) und die Querschnitts-Abmessungen des Hochfrequenz-Wellenleiters 100 entlang der Wellenleiter-Achse a auf die Frequenz des Hochfrequenz-Signals S_{HF}, E_{HF} optimiert.

Bei der in Fig. 2 gezeigten Ausführungsvariante ist der Hochfrequenz-Wellenleiter 100 aus einem dielektrischen Material gefertigt. Dabei kann der Hochfrequenz-Wellenleiter 100 mit umso kleineren Abmessungen bemaßt werden, je höher die Permittivität des dielektrischen Materials bei der entsprechenden Frequenz des Hochfrequenz-Signals S_{HF}, E_{HF} ist. Hierfür geeignete Materialien, die eine Permittivität von größer als zwei aufweisen, und die zudem eine verlässliche Druck- und-Temperatur-Beständigkeit aufweisen, sind beispielsweise Titan-Oxid, Aluminium-Oxid oder Zirkon-Oxid. Optional kann der Hochfrequenz-Wellenleiter 100 mit Ausnahme der ersten Endfläche 1001 außenseitig mit einer Metallisierung versehen werden, um die Transmission innerhalb des Hochfrequenz-Wellenleiters 100 weiter zu verbessern. In diesem Zusammenhang ist es vorteilhaft, wenn die zweite Endfläche 1003 des Hochfrequenz-Wellenleiters 100, die in Bezug zur Wellenleiter-Achse a der ersten Endfläche 1001 gegenüberliegt, das Hochfrequenz-Signal S_{HF}, E_{HF} mit einem Phasensprung von 180° reflektiert. Hochfrequenztechnisch angesteuert wird der Hochfrequenz-Wellenleiter 100 von der Signalerzeugungs-Einheit 11 bzw. von der Auswertungs-Einheit 12 über einen elektrischen Koaxial-Leiter 101, wie beispielsweise ein KoaxialKabel. Über diesen Koaxial-Leiter 101 kann die Signalerzeugungs-Einheit 11 das auszusendende Hochfrequenz-Signal S_{HF} in den Hochfrequenz-Wellenleiter 100 einkoppeln, bzw. die Auswertungs-Einheit 12 kann über den Koaxial-Leiter 101 das empfangene Hochfrequenz-Signal E_{HF} abgreifen. Hierzu ist rechtwinklig zur Wellenleiter-Achse a eine durchgängige Durchführung 1002 in den Hochfrequenz-Wellenleiter 100 eingelassen, deren Durchmesser auf den Außendurchmesser des Koaxial-Leiters 101 abgestimmt ist. Dabei ist der Außenleiter 1011 des Koaxial-Leiters 101 elektrisch mit dem Hochfrequenz-Wellenleiter 100 verbunden. Der Innenleiter des Koaxial-Leiters 101 verläuft durch die Durchführung 1002 hindurch bis zum Leiter-Abschluss 1012 des Koaxial-Leiters 101. Dabei ist die Durchführung 1002 optimalerweise so anzubringen, dass die Entfernung d der zweiten Endfläche 1003 des Hochfrequenz-Wellenleiters 100 zum Koaxial-Leiter 101 hin einem Viertel der Wellenlänge des Hochfrequenz-Signals S_{HF}, E_{HF} entspricht. In Verbindung mit dem Phasensprung von 180° an der zweiten Endfläche 1003 optimiert dies die Transmission im Hochfrequenz-Wellenleiter 100.

Endseitig verfügt der Koaxial-Leiter 101 über ein Anschluss-Mittel 1013, wie beispielsweise einen Bajonett-Anschluss zur hochfrequenztechnischen Verbindung der jeweiligen Einheit 11, 12 mit dem Koaxial-Leiter 101 bzw. mit der Antenne 10, 10`. Dabei ist der Leiter-Abschluss 1012 des Koaxial-Leiters 101, welcher dem Anschluss-Mittel 1013 am Koaxial-Leiter 101 gegenüberliegt, so ausgelegt, dass das einzukoppelnde bzw. abzugreifende Hochfrequenz-Signal S_{HF}, E_{HF} dort ohne Phasensprung reflektiert wird. Bei der in Fig. 2 gezeigten Ausführungsvariante ist der Koaxial-Leiter 101 hierzu als offenes Leiter-Ende ausgelegt. Außerdem ist der Koaxial-Leiter 101 derart durch die Durchführung 1002 hindurchgeführt, dass der Leiter-Abschluss 1012 nicht bündig mit der Durchführung 1002 abschließt, sondern so dass der Leiter-Abschluss 1012 mit einer definierten Überlänge I über die Durchführung 1002 hinaus absteht. Somit kann dem Koaxial-Leiter 101 zwischen der Durchführung 1002 und dem Leiter-Abschluss 1012 eine definierte Kapazität C zugewiesen werden. Dabei bemisst sich die Kapazität C nach der parasitären Kapazität des Hochfrequenz-Wellenleiters 100.

Damit die Aus- und Einkopplung des Hochfrequenz-Signals S_{HF}, E_{HF} aus bzw. in die Antenne 10, 10' maximiert wird, ist es außerdem vorteilhaft, die Cutoff-Frequenz der Antenne 10, 10' so einzustellen, dass die Cutoff-Frequenz mindestens 10 % niedriger als die (niedrigste) Frequenz des Hochfrequenz-Signals S_{HF}, E_{HF} ist. Der in diesem Zusammenhang primär relevante Parameter ist die Querschnittsgeometrie des Hochfrequenz-Wellenleiters 100 in Bezug zur Wellenleiter-Achse a. Daneben muss auch die Gesamtlänge des Hochfrequenz-Wellenleiters 100 entlang der Achse a, also zwischen der ersten Endfläche 1001 und der zweiten Endfläche 1003 des Hochfrequenz-Wellenleiters 100 so ausgelegt werden, dass die hochfrequenztechnische Kopplung zwischen dem Koaxial-Leiter 101 und dem Hochfrequenz-Wellenleiter 100 maximal ist.

Wie in Fig. 2 gezeigt ist, werden der Hochfrequenz-Wellenleiter 100 und der Koaxial-Leiter 101 mit Ausnahme des Anschluss-Mittels 1013 und mit Ausnahme der ersten Endfläche1001 von einem Trägerkörper 102 eingefasst. Dabei umschließt der Trägerkörper 102 den Hochfrequenz-Wellenleiter 100 bis auf die zweite Endfläche 1003 des Hochfrequenz-Wellenleiters 100, zu der ein definierter Hohlraum ausgebildet ist, formschlüssig. Dabei ist der Hohlraum zum dauerhaften Fixieren des Hochfrequenz-Wellenleiters 100 mittels Kleber vorgesehen. Auch den Koaxial-Leiter 101 umschließt der Trägerkörper 102 bis auf die Länge I zwischen der Durchführung 1002 und dem Leiter-Abschluss 1012 formschlüssig. Durch die prinzipiell formschlüssige Auslegung des Trägerkörpers 102 kann die Antenne 10, 10' die jeweilige Öffnung des Rohrleitungsabschnitt 3, an welcher die Antenne 10, 10' angebracht ist, überdruckfest abdichten.

Im fertiggestellten Zustand der Antenne 10, 10' ist der Hochfrequenz-Wellenleiter 100 zunächst ausschließlich mittels eines Schraubeinsatzes 1021 im Trägerkörper 102 fixiert. Wie aus Fig. 2 zu erkennen ist, sind der Trägerkörper 102 und der Schraubeinsatz 1021 hierzu derart mittels eines korrespondierenden Gewindes versehen, dass der Schraubeinsatz 1021 über den Leiter-Abschluss 1012 in Richtung des Koaxial-Leiters 101 in den Trägerkörper 102 einschraubbar ist. Dadurch drückt der Schraubeinsatz 1021 den Hochfrequenz-Wellenleiter 100 im verschraubten Zustand über ein Feder-Element 1022 orthogonal zur Wellenleiter-Achse a gegen den Trägerkörper 102. Zur nachhaltigen Fixierung des Hochfrequenz-Wellenleiters 100 kann in den Hohlraum hinter der zweiten Endfläche 1003 zusätzlich Kleber eingebracht werden. Dabei ist zwischen dem Feder-Element 1022 und dem Hochfrequenz-Wellenleiter 100 zur Abdichtung gegenüber dem Medium 2 bzw. dem Kleber zusätzlich ein Dichtring 1023 um den Koaxial-Leiter 101 herum angeordnet. Zur Fertigung der Antenne 10, 10' ist vor dem Einschrauben jedoch zunächst der Hochfrequenz-Wellenleiter 100 über eine korrespondierende Öffnung im Trägerkörper 102 für die erste Endfläche 1001, die im montierten Zustand gen Medium 2 gerichtet ist, einzusetzen. Außerdem ist der Koaxial-Leiter 101 in die Durchführung 1002 des Hochfrequenz-Wellenleiters 100 einzusetzen, wobei dies vor oder nach dem Einschrauben des Schraubeinsatzes 1021 erfolgen kann. Insgesamt lässt sich die Antenne 10; 10' somit in wenigen Fertigungsschritten herstellen.

### Bezugszeichenliste

- 1: Dielektrizitätswert-Messgerät
- 2: Medium
- 3: Rohrleitungsabschnitt
- 10: Sende-Antenne
- 10': Empfangs-Antenne
- 11: Signalerzeugungs-Einheit
- 12: Auswertungs-Einheit
- 100: Hochfrequenz-Wellenleiter
- 101: Koaxial-Leiter
- 102: Trägerkörper
- 1001: Erste Endfläche des Hochfrequenz-Wellenleiters
- 1002: Durchführung im Hochfrequenz-Wellenleiter
- 1003: Zweite Endfläche des Hochfrequenz-Wellenleiters
- 1011: Elektrischer Außenleiter des Koaxial-Leiters
- 1012: Leiter-Abschluss des Koaxial-Leiters
- 1013: Anschluss-Mittel
- 1021: Schraub-Einsatz
- 1022: Feder-Element
- 1023: Dichtring
- a: Wellenleiter-Achse
- C: Kapazität des Koaxial-Leiters
- DK: Dielektrizitätswert
- d: Entfernung der zweiten Endfläche zur Durchführung
- E_{HF}: Empfangenes Hochfrequenz-Signal
- I: Länge des Koaxial-Leiters hinter der Durchführung
- S_{HF}: Hochfrequenz-Signal

## Patentansprüche

1. Antenne (10, 10') zum Aussenden und/oder Empfangen von Hochfrequenz-Signalen (S_{F}, E_{HF}), umfassend:
- Einen Hochfrequenz-Wellenleiter (100), mittels dem das Hochfrequenz-Signal (S_{HF}, E_{HF}) entlang einer Wellenleiter-Achse (a) transmittierbar ist, mit
∘ einer ersten Endfläche (1001), die in etwa orthogonal zur Wellenleiter-Achse (a) ausgerichtet ist, um das Hochfrequenz-Signal (S_{HF}, E_{HF}) hierüber gen Medium (2) auszusenden bzw. zu empfangen, und mit
∘ einer in etwa orthogonal zur Wellenleiter-Achse (a) verlaufenden Durchführung (1002), für
- einen Koaxial-Leiter (101), um das auszusendende Hochfrequenz-Signal (S_{HF}) in den Hochfrequenz-Wellenleiter (100) einzukoppeln, bzw. um das empfangene Hochfrequenz-Signal (E_{HF}) abzugreifen, mit
o einem elektrischen Außenleiter (1011), der elektrisch mit dem Hochfrequenz-Wellenleiter (101) verbunden ist,
∘ einem derart ausgelegten Leiter-Abschluss (1012), so dass das einzukoppelnde bzw. abzugreifende Hochfrequenz-Signal (S_{HF}, E_{HF}) dort reflektiert wird, und
∘ einem dem Leiter-Abschluss (1012) gegenüberliegenden Anschluss-Mittel (1013) zur hochfrequenztechnischen Kontaktierung der Antenne (10, 10'),
wobei der Koaxial-Leiter (101) derart weit (I) über die Durchführung hinaus (1002) durchgeführt ist, dass der Koaxial-Leiter (101) zwischen der Durchführung (1002) und dem Leiter-Abschluss (1012) eine definierte Kapazität (C) ausbildet.

2. Antenne nach Anspruch 1, umfassend:
- Einen Trägerkörper (102), welcher den Hochfrequenz-Wellenleiter (100) und den Koaxial-Leiter (101) zumindest zwischen der Durchführung (1002) und dem Leiter-Abschluss (1012) einfasst.

3. Antenne nach Anspruch 1 oder 2, wobei der Hochfrequenz-Wellenleiter (100) als Hohlleiter oder als dielektrischer Wellenleiter ausgelegt ist.

4. Antenne nach Anspruch 3, wobei der Hochfrequenz-Wellenleiter (100) aus einem dielektrischen Material, insbesondere TiOx, AIOx oder ZrOx gefertigt ist, welches bei einer entsprechenden Frequenz des Hochfrequenz-Signals (S_{HF}, E_{HF}) eine Permittivität von zumindest 2 aufweist, sofern der Hochfrequenz-Wellenleiter (100) als dielektrischer Wellenleiter ausgelegt ist.

5. Antenne nach Anspruch 3 oder 4, wobei der Hochfrequenz-Wellenleiter (100) mit Ausnahme der ersten Endfläche (1001) mit einer elektrischen Beschichtung beschichtet ist, sofern der Hochfrequenz-Wellenleiter (100) als dielektrischer Wellenleiter ausgelegt ist.

6. Antenne nach zumindest einem der vorhergehenden Ansprüche, wobei der Hochfrequenz-Wellenleiter (100) eine zweite Endfläche (1003) umfasst, die in Bezug zur Wellenleiter-Achse (a) der ersten Endfläche (1001) gegenüberliegt und das Hochfrequenz-Signal (S_{HF}, E_{HF}) mit einem Phasensprung von 180° reflektiert.

7. Antenne nach Anspruch 6, wobei die Entfernung (d) zwischen der Durchführung (1002) und der zweiten Endfläche (1003) einem Viertel der Wellenlänge des Hochfrequenz-Signals (S_{HF}, E_{HF}) entspricht.

8. Antenne nach einem der vorhergehenden Ansprüche, wobei der Querschnitt des Hochfrequenz-Wellenleiters (100) derart bemessen ist, so dass die Antenne (10, 10') eine Cutoff-Frequenz aufweist, die minimal 10 % niedriger als die Frequenz des Hochfrequenz-Signals (S_{HF}, E_{HF}) ist.

9. Antenne nach einem der vorhergehenden Ansprüche, wobei der Leiter-Abschluss (1012) des Koaxial-Leiters (101) derart ausgelegt ist, so dass das einzukoppelnde bzw. abzugreifende Hochfrequenz-Signal (S_{HF}, E_{HF}) dort ohne Phasensprung reflektiert wird.

10. Antenne nach ein zumindest einem der Ansprüche 2 bis 9, wobei der Hochfrequenz-Wellenleiter (100) mittels eines Schraubeinsatzes (1021), welcher über den Leiter-Abschluss (1012) in Richtung des Koaxial-Leiters (101) in den Trägerkörper (102) einschraubbar ist, im Trägerkörper (102) fixiert ist.

11. Verfahren zur Fertigung der Antenne (10, 10') nach Anspruch 10, folgende Verfahrensschritte umfassend:
- Bereitstellen des Hochfrequenz-Wellenleiters (100), des Koaxial-Leiters (101) und des Trägerkörpers (102, 1021, 1022, 1023),
- Einsetzen des Hochfrequenz-Wellenleiters (100) in den Trägerkörper (101) über eine korrespondierende Öffnung im Trägerkörper (102) für die erste Endfläche (1001) des Hochfrequenz-Wellenleiters (100),
- Einsetzen des Koaxial-Leiters (101) in die Durchführung (1002) des Hochfrequenz-Wellenleiters (100), und
- Fixierung des Hochfrequenz-Wellenleiters (100) und/oder des Koaxial-Leiters (101) mittels Einschrauben des Schraubeinsatzes (1021) in den Trägerkörper (102).

12. Hochfrequenz-basiertes Messgerät (1) zur Bestimmung eines Dielektrizitätswertes (DK) eines Mediums (2), umfassend:
- Zumindest eine Antenne (10, 10') nach einem der Ansprüche 1 bis 10, um das Hochfrequenz-Signal (S_{HF}) gen Medium (2) auszusenden, und/oder um das Hochfrequenz-Signal (E_{HF}) nach Interaktion mit dem Medium (2) zu empfangen,
- eine Signalerzeugungs-Einheit (11), die zur Erzeugung des auszusendenden Hochfrequenz-Signals (S_{HF}) mit dem Anschluss-Mittel (1013) der Sende-Antenne (10) verbunden ist, und
- eine Auswertungs-Einheit (12), die mit dem Anschluss-Mittel (1013) der Empfangs-Antenne (10, 10') verbunden ist, um den Dielektrizitätswert (DK) zumindest anhand des empfangenen Hochfrequenz-Signals (E_{HF}) zu bestimmen.

13. Dielektrizitätswert-Messgerät nach Anspruch 12, wobei die Auswertungs-Einheit (12) ausgelegt ist, den Dielektrizitätswert (DK) anhand einer Amplitude, einer Phase oder einer Signallaufzeit des empfangenen Hochfrequenz-Signals (E_{HF}) zu ermitteln.

## Claims

1. Antenna (10, 10') for transmitting and/or receiving radio frequency signals (S_{F}, E_{HF} ), comprising:
- A high-frequency waveguide (100) by means of which the high-frequency signal (S_{HF} , E_{HF}) can be transmitted along a waveguide axis (a), with
∘ a first end face (1001), which is aligned approximately orthogonally to the waveguide axis (a), in order to transmit or receive the high-frequency signal (S_{HF} , E_{HF}) to or via the medium (2), and with
∘ a feedthrough (1002) extending approximately orthogonally to the waveguide axis (a), for
- a coaxial conductor (101) for coupling the high-frequency signal (S_{HF} ) to be transmitted into the high-frequency waveguide (100) or for tapping the received high-frequency signal (E_{HF} ), with
∘ an electrical outer conductor (1011) which is electrically connected to the high-frequency waveguide (101),
∘ a conductor termination (1012) designed in such a way that the high-frequency signal (S_{HF} , E_{HF}) to be coupled in or tapped is reflected there, and
∘ a connection means (1013) opposite the conductor termination (1012) for high-frequency contacting of the antenna (10, 10'),
wherein the coaxial conductor (101) is passed through (I) beyond the bushing (1002) such that the coaxial conductor (101) forms a defined capacitance (C) between the bushing (1002) and the conductor termination (1012).

2. An antenna according to claim 1, comprising:
- A carrier body (102) which encloses the high-frequency waveguide (100) and the coaxial conductor (101) at least between the feedthrough (1002) and the conductor termination (1012).

3. Antenna according to claim 1 or 2, wherein the high-frequency waveguide (100) is designed as a waveguide or as a dielectric waveguide.

4. Antenna according to claim 3, wherein the high-frequency waveguide (100) is made of a dielectric material, in particular TiOx, AlOx or ZrOx, which has a permittivity of at least 2 at a corresponding frequency of the high-frequency signal (S_{HF} , E_{HF} ), provided that the high-frequency waveguide (100) is designed as a dielectric waveguide.

5. Antenna according to claim 3 or 4, wherein the high-frequency waveguide (100) is coated with an electrical coating with the exception of the first end face (1001), provided that the high-frequency waveguide (100) is designed as a dielectric waveguide.

6. Antenna according to at least one of the preceding claims, wherein the radio frequency waveguide (100) comprises a second end face (1003) which is opposite the first end face (1001) with respect to the waveguide axis (a) and reflects the radio frequency signal (S_{HF} , E_{HF} ) with a phase jump of 180°.

7. Antenna according to claim 6, wherein the distance (d) between the feedthrough (1002) and the second end face (1003) corresponds to a quarter of the wavelength of the high-frequency signal (S_{HF} , E_{HF} ).

8. Antenna according to one of the preceding claims, wherein the cross-section of the high-frequency waveguide (100) is dimensioned such that the antenna (10, 10') has a cut-off frequency which is at least 10% lower than the frequency of the high-frequency signal (S_{HF} , E_{HF} ).

9. Antenna according to one of the preceding claims, wherein the conductor termination (1012) of the coaxial conductor (101) is designed such that the high-frequency signal (S_{HF} , E_{HF} ) to be coupled in or picked up is reflected there without a phase jump.

10. Antenna according to at least one of claims 2 to 9, wherein the high-frequency waveguide (100) is fixed in the carrier body (102) by means of a screw insert (1021), which can be screwed into the carrier body (102) via the conductor termination (1012) in the direction of the coaxial conductor (101).

11. A method of manufacturing the antenna (10, 10') according to claim 10, comprising the following method steps:
- Providing the high-frequency waveguide (100), the coaxial conductor (101) and the carrier body (102, 1021, 1022, 1023),
- Insertion of the high-frequency waveguide (100) into the carrier body (101) via a corresponding opening in the carrier body (102) for the first end face (1001) of the high-frequency waveguide (100),
- inserting the coaxial conductor (101) into the bushing (1002) of the high-frequency waveguide (100), and
- Fixing the high-frequency waveguide (100) and/or the coaxial conductor (101) by screwing the screw insert (1021) into the carrier body (102).

12. A high-frequency-based measuring device (1) for determining a dielectric constant (DK) of a medium (2), comprising:
- At least one antenna (10, 10') according to one of claims 1 to 10 for transmitting the radio frequency signal (S_{HF} ) towards the medium (2), and/or for receiving the radio frequency signal (E_{HF} ) after interaction with the medium (2),
- a signal generating unit (11) connected to the connection means (1013) of the transmitting antenna (10) for generating the radio frequency signal (S_{HF} ) to be transmitted, and
- an evaluation unit (12) which is connected to the connection means (1013) of the receiving antenna (10, 10') in order to determine the dielectric value (DK) at least on the basis of the received radio frequency signal (E )._{HF}

13. Dielectric value measuring device according to claim 12, wherein the evaluation unit (12) is designed to determine the dielectric value (DK) on the basis of an amplitude, a phase or a signal propagation time of the received high-frequency signal (E )._{HF}

## Revendications

1. Antenne (10, 10') pour l'émission et/ou la réception de signaux à haute fréquence (S_{F} , E_{HF} ), comprenant :
- un guide d'ondes haute fréquence (100), au moyen duquel le signal haute fréquence (S_{HF} , E_{HF} ) peut être transmis le long d'un axe de guide d'ondes (a), avec
∘ une première face d'extrémité (1001) orientée approximativement orthogonalement à l'axe du guide d'ondes (a) pour émettre et recevoir le signal à haute fréquence (S_{HF} , E_{HF} ) par l'intermédiaire de celui-ci dans le milieu (2), et avec
∘ un passage (1002) à peu près orthogonal à l'axe (a) du guide d'ondes, pour
- un conducteur coaxial (101) pour coupler le signal haute fréquence (S_{HF} ) à émettre dans le guide d'ondes haute fréquence (100), ou pour prélever le signal haute fréquence (E_{HF} ) reçu, avec
∘ un conducteur électrique extérieur (1011) connecté électriquement au guide d'ondes haute fréquence (101),
∘ une terminaison de conducteur (1012) conçue de telle sorte que le signal à haute fréquence (S_{HF} , E_{HF} ) à coupler ou à prélever y soit réfléchi, et
∘ un moyen de raccordement (1013) opposé à la terminaison de conducteur (1012) pour la mise en contact technique à haute fréquence de l'antenne (10, 10'),
dans lequel le conducteur coaxial (101) est passé au-delà de la traversée (1002) sur une distance (I) telle que le conducteur coaxial (101) forme une capacité définie (C) entre la traversée (1002) et la terminaison de conducteur (1012).

2. Antenne selon la revendication 1, comprenant :
- un corps de support (102) qui entoure le guide d'ondes haute fréquence (100) et le guide coaxial (101) au moins entre la traversée (1002) et la terminaison de guide (1012).

3. Antenne selon la revendication 1 ou 2, dans laquelle le guide d'ondes haute fréquence (100) est conçu comme un guide d'ondes creux ou comme un guide d'ondes diélectrique.

4. Antenne selon la revendication 3, dans laquelle le guide d'ondes haute fréquence (100) est fabriqué en un matériau diélectrique, en particulier TiOx, AIOx ou ZrOx, qui présente une permittivité d'au moins 2 à une fréquence correspondante du signal haute fréquence (S_{HF} , E_{HF} ), dans la mesure où le guide d'ondes haute fréquence (100) est conçu comme un guide d'ondes diélectrique.

5. Antenne selon la revendication 3 ou 4, dans laquelle le guide d'ondes haute fréquence (100) est revêtu d'un revêtement électrique à l'exception de la première face d'extrémité (1001), dans la mesure où le guide d'ondes haute fréquence (100) est conçu comme un guide d'ondes diélectrique.

6. Antenne selon au moins l'une des revendications précédentes, dans laquelle le guide d'onde radiofréquence (100) comprend une deuxième face d'extrémité (1003) opposée à la première face d'extrémité (1001) par rapport à l'axe du guide d'onde (a) et réfléchissant le signal radiofréquence (S_{HF} , E_{HF} ) avec un saut de phase de 180°.

7. Antenne selon la revendication 6, dans laquelle la distance (d) entre la traversée (1002) et la deuxième face d'extrémité (1003) correspond à un quart de la longueur d'onde du signal haute fréquence (S_{HF} , E_{HF} ).

8. Antenne selon l'une quelconque des revendications précédentes, dans laquelle la section transversale du guide d'onde radiofréquence (100) est dimensionnée de manière à ce que l'antenne (10, 10') présente une fréquence de coupure qui est au moins 10% inférieure à la fréquence du signal radiofréquence (S_{HF} , E_{HF} ).

9. Antenne selon l'une des revendications précédentes, dans laquelle la terminaison (1012) du conducteur coaxial (101) est conçue de telle sorte que le signal haute fréquence (S_{HF} , E_{HF} ) à injecter ou à prélever y soit réfléchi sans saut de phase.

10. Antenne selon l'une au moins des revendications 2 à 9, dans laquelle le guide d'ondes haute fréquence (100) est fixé dans le corps de support (102) au moyen d'un insert fileté (1021) qui peut être vissé dans le corps de support (102) par l'intermédiaire de la terminaison de guide (1012) en direction du guide coaxial (101).

11. Procédé de fabrication de l'antenne (10, 10') selon la revendication 10, comprenant les étapes de procédé suivantes :
- fournir le guide d'ondes haute fréquence (100), le guide coaxial (101) et le corps de support (102, 1021, 1022, 1023),
- l'insertion du guide d'ondes haute fréquence (100) dans le corps de support (101) via une ouverture correspondante dans le corps de support (102) pour la première face d'extrémité (1001) du guide d'ondes haute fréquence (100),
- l'insertion du guide coaxial (101) dans la traversée (1002) du guide d'ondes haute fréquence (100), et
- fixation du guide d'ondes haute fréquence (100) et/ou du guide coaxial (101) par vissage de l'insert de vis (1021) dans le corps de support (102).

12. Appareil de mesure (1) basé sur la haute fréquence pour déterminer une valeur diélectrique (DK) d'un milieu (2), comprenant :
- Au moins une antenne (10, 10') selon l'une des revendications 1 à 10, pour émettre le signal radiofréquence (S_{HF} ) vers le milieu (2), et/ou pour recevoir le signal radiofréquence (E_{HF} ) après interaction avec le milieu (2),
- une unité de génération de signal (11), qui est reliée au moyen de connexion (1013) de l'antenne d'émission (10) pour générer le signal haute fréquence (S_{HF} ) à émettre, et
- une unité d'évaluation (12) qui est reliée au moyen de connexion (1013) de l'antenne de réception (10, 10'), afin de déterminer la valeur diélectrique (DK) au moins à l'aide du signal haute fréquence reçu (E_{HF} ).

13. Appareil de mesure de la valeur diélectrique selon la revendication 12, dans lequel l'unité d'évaluation (12) est conçue pour déterminer la valeur diélectrique (DK) à l'aide d'une amplitude, d'une phase ou d'un temps de propagation de signal du signal haute fréquence reçu (E_{HF} ).
